# EUROPÄISCHE PATENTSCHRIFT

(11) **EP 2 396 515 B1**
(45) Veröffentlichungstag und Bekanntmachung des Hinweises auf die Patenterteilung: **20.07.2016**
(21) Anmeldenummer: 11707065.6
(22) Anmeldetag: 14.01.2011
(51) Int. Cl.: F01D 5/16, F01D 5/14

(54) **LAUFSCHAUFEL FÜR EINE STRÖMUNGSMASCHINE UND STRÖMUNGSMASCHINE**
ROTOR BLADE FOR A TURBOMACHINE AND TURBOMACHINE
AUBE MOBILE POUR UNE TURBOMACHINE ET TURBOMACHINE

(30) Priorität: 16.01.2010 DE 102010004854
(43) Veröffentlichungstag der Anmeldung: 21.12.2011
(73) Patentinhaber: MTU Aero Engines AG, 80995 München (DE)
(72) Erfinder: SCHLEMMER, Markus, 84048 Mainburg (DE); PIKUL, Bartlomiej, PL-33-100 Tarnow (PL)
(86) Internationale Anmeldenummer: PCT/DE2011/000031
(87) Internationale Veröffentlichungsnummer: WO 2011/085721

(56) Entgegenhaltungen:
- EP-A1- 1 731 712
- EP-A2- 1 688 587
- EP-A2- 1 749 970
- FR-A1- 2 905 413
- JP-A- 5 044 691
- US-A- 5 435 694
- US-A- 6 017 186
- US-A1- 2007 177 979
- US-A1- 2009 087 316

## Beschreibung

Die Erfindung betrifft eine Laufschaufel nach dem Oberbegriff des Patentanspruchs 1 und eine Gasturbine mit einer derartigen Laufschaufel.

Schaufeln in Dampf bzw. Gasturbinen sind stets hohen mechanischen, chemischen und physikalischen Belastungen ausgesetzt. Daher wird seit langem versucht, insbesondere die Laufschaufeln hinsichtlich ihrer mechanischen Belastbarkeit wie Spannungsverteilung und Resonanzverhaltens zu verbessern. So ist in der US 6,976,826 B2 eine Laufschaufel gezeigt, die blattspitzenseitig mit einer Tasche zur Aufnahme eines andersartigen Material versehen ist. Das andersartige Material verändert die Gewichtsverteilung der Schaufel im Blattspitzenbereich und bewirkt eine Veränderung des Schwingungs- bzw. des Resonanzveraltens. Grundsätzlich besteht jedoch die Gefahr, dass im Bereich der Tasche rissbegünstigende Kanten bzw. Übergange entstehen, so dass diese Lösung eine aufwendige Fertigung erfordert. Ferner sind die Materialeigenschaften des andersartigen Werkstoffs exakt zu definieren. In dem Patent US 6,755,986 B2 wird zur Gewichtsreduzierung einer Laufschaufel eine schaufelfußseitige Ausnehmung vorgeschlagen. Nachteilig ist jedoch, dass sich eine Veränderung des Schwingungsverhaltens und der Spannungsverläufe nahezu nicht erzielen lässt, da die Laufschaufel mit ihrem Schaufelfuß und somit die Ausnehmung fest in dem Rotor eingespannt ist. In dem Patent US 4,595,340 wird eine Laufschaufel mit einer schaufelfußseitigen Ausnehmung gezeigt, die sich durch ihre Plattform in das Schaufelblatt erstreckt, wodurch neben einer Gewichtsreduzierung ebenfalls ein verändertes Schwingungsverhaltens erreichbar ist. Hierbei besteht jedoch die Gefahr einer Schwächung des Schaufelblattes.

Des Weiteren ist es bei in Axialrichtung verlängerten Plattformüberhängen bekannt, zur Schwingungsreduzierung Einfach- oder Mehrfachrippen sowie entsprechende Materialaufdickungen vorzusehen. Diese Gegenmaßnahmen bedeuten jedoch ein Mehrgewicht, was zu Rissen im Schaufelfuß führen kann. Ferner können insbesondere durch die Rippen Wirbel und somit Strömungsverluste entstehen.

Die EP 1 688 587 A2 zeigt eine Turbinenschaufel mit einem anströmseitigem Plattformüberhang.

Die EP 1 749 970 zeigt eine Turbinenschaufel nach dem Obergriff des Anspruch 1.

Aufgabe der vorliegenden Erfindung ist es, eine spannungs- und schwingungsoptimierte Laufschaufel, die die vorgenannten Nachteile beseitigt und einfach herzustellen ist, sowie eine Gasturbine mit einer derartigen Laufschaufel zu schaffen.

Diese Aufgabe wird gelöst durch eine Laufschaufel mit den Merkmalen des Patentanspruchs 1 und durch eine Strömungsmaschine mit den Merkmalen des Patentanspruchs 15.

Eine erfindungsgemäße Laufschaufel für eine Strömungsmaschine hat einen Schaufelfuß zur Befestigung an einem Rotor, ein Schaufelblatt und eine zwischen dem Schaufelfuß und dem Schaufelblatt angeordnete Plattform, die zumindest einen Plattformüberhang aufweist. Erfindungsgemäß ist der Plattformüberhang im Übergangsbereich zur Plattform mit einem variablen Übergangsradius versehen.

Der variable Übergangsradius erlaubt die gezielte Einstellung der Laufschaufel hinsichtlich ihres Schwingungsverhaltens und ihrer Spannungsverläufe. Hierdurch kann eine erhöhte Spannungskonzentration der Laufschaufel in verschiedenen Schaufelbereichen reduziert und gleichzeitig die Schwingung am Plattformüberhang angepasst werden. Da gezielt die Spannungsverläufe in der Laufschaufel berücksichtigt bzw. eingestellt werden, erfolgt keine Schwächung der Laufschaufel, sondern vielmehr eine Stärkung. Mit anderen Worten, die erfindungsgemäße Laufschaufel hat einen optimierten Schwerpunkt und ein optimales Gewicht mit reduzierter Spannungskonzentration in bestimmten Bereichen bei angepasster Plattformschwingung und somit eine erhöhte Steifigkeit. Der Übergangsradius wird direkt bei der Herstellung der Laufschaufel ausgebildet, so dass eine Nachbearbeitung der Schaufel wie bei dem bekannten Auffüllen von schaufelspitzenseitigen Taschen entfällt. Ebenso müssen keine Rippen ausgebildet werden, was ebenfalls die Herstellung, beispielsweise einen Gießprozess, vereinfacht. Ferner besteht die Laufschaufel nur aus einem Material und nicht aus einer Vielzahl von Materialien wie bei der vorbeschriebenen Taschenlösung im Blattspitzenbereich.

Bei einem Ausführungsbeispiel ist der variable Übergangsradius schaufelfußseitig ausgebildet. Hierdurch erfolgt keine Beeinflussung der Strömungsverläufe im Strömungskanal, insbesondere dann nicht, wenn ein schaufeblattseitiger Übergangsradius des Plattformüberhangs konstant ausgebildet ist.

Eine besonders effektive Beeinflussung des Schwingungsverhaltens und der Spannungsverläufe und somit des Laufverhaltens lässt sich erzielen, wenn der variable Übergangsradius in Plattformbereichen mit hohen Belastungen kleiner ausgeführt ist als in Plattformbereichen mit geringen Belastungen. So nimmt beispielsweise bei einem Ausführungsbeispiel der Übergangsradius insbesondere in Drehrichtung des Rotors zu. Dabei lässt sich das Laufverhalten der Laufschaufel weiter optimieren, wenn die Laufschaufel im Bereich von hohen Belastungen einen gegenüber bekannten Laufschaufeln reduzierten und im Bereich von geringen Belastungen einen gegenüber bekannten Laufschaufeln gesteigerten Übergangsradius auf

Je nach den zu treffenden Anforderungen kann der Übergangsradius abschnittsweise auch konstant ausgebildet sein. So ist der Übergangsradius zum Beispiel bei einer Variante stufenartig ausgebildet. Ebenso kann er nur endseitig konstant ausgeführt sein.

In dem Fall, in dem die Laufschaufel einen weiteren Plattformüberhang aufweist, kann dieser ebenfalls zur Einstellung des Laufverhaltens herangezogen werden und mit einem variablen Übergangsradius versehen sein. Ebenso kann er einen konstanten Übergangsradius aufweisen. Grundsätzlich richtet sich die Ausbildung der Übergangsradien an den Plattformüberhängen nach den jeweiligen Anforderungen und kann variabel gewählt werden. So ist es möglich, an beiden Plattformüberhängen variable Übergangsradien vorzusehen oder auch nur an einem der Plattformüberhänge.

Eine erfindungsgemäße Strömungsmaschine, insbesondere eine Gasturbine, weist zumindest eine Laufschaufel mit einem variablen Übergangsradius am Plattformüberhang auf Eine derartige Gasturbine mit einer Vielzahl von derartigen Laufschaufeln zeichnet sich durch eine hohe Laufruhe über ihr gesamtes Drehzahlband aus und ist somit insbesondere für Flugzeugtriebwerke geeignet.

Sonstige vorteilhafte Ausführungsbeispiele der Erfindung sind Gegenstand weiterer Unteransprüche.

Im Folgenden wird ein bevorzugtes Ausführungsbeispiel der Erfndung anhand schematischer Darstellungen näher erläutert. Es zeigen
Figur 1 eine perspektivische Ansicht eines Plattformbereichs einer ersten erfindungsgemäße Laufschaufel,
Figur 2 einen Blick auf die Laufschaufel aus Figur 1 aus der Froschperspektive,
Figur 3 eine perspektivische Ansicht eines Plattformbereichs einer zweiten erfindungsgemäße Laufschaufel,
Figur 4 einen Blick auf die Laufschaufel aus Figur 3 aus der Froschperspektive,
Figur 5 eine Vorderansicht des Ausführungsbeispiels aus den Figuren 1 und 2,
Figur 6 eine Vorderansicht des Ausführungsbeispiels aus den Figuren 3 und 4,
Figuren 7 bis 10 Vorderansichten weiterer erfindungsgemäßer Ausführungsbeispiele und
Figur 11 eine Vorderansicht einer Laufschaufel zur zusammenfassenden Verdeutlichung der erfindungsgemäßen Radien.

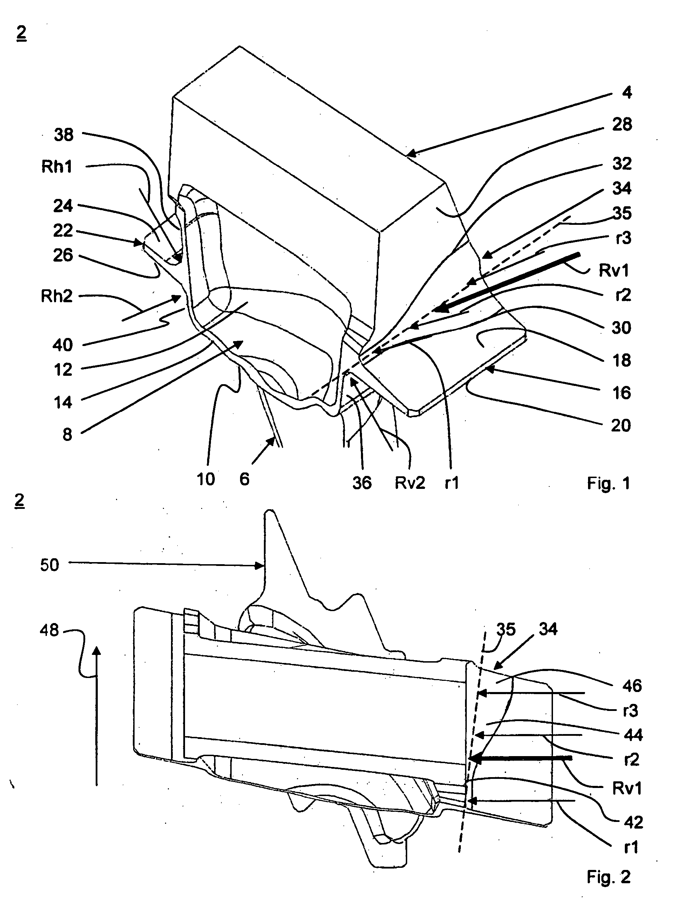

Figur 1 zeigt eine perspektivische Darstellung einer Schaufel 2 einer Strömungsmaschine aus der Froschperspektive. Die Schaufel 2 ist beispielsweise ein Gusteil und als eine Laufschaufel einer Gasturbine, insbesondere eines Flugzeugtriebwerks, ausgebildet. Sie ist als ein Zwischenprodukt dargestellt mit einem Schaufelfuß 4 zur Befestigung an einem Rotor, einem Schaufelblatt 6 und einer zwischen dem Schaufelfuß 4 und dem Schaufelblatt 6 angeordnete Plattform 8. Die Plattform 8 hat eine dem Schaufelblatt 6 zugewandte Plattformoberfläche 10. Schaufelfußseitig ist die Plattform 8 mit einer Ausnehmung 12 versehen, so dass die Plattformoberfläche 10 von einem verhältnismäßig dünnen Steg 14 gebildet wird. In einem weiteren Bearbeitungsschritt kann zum Beispiel der Schaufelfuß 4 zu einem Tannbaumfuß ausgebildet werden. \

Die Plattform 8 ist im vorderen Bereich, d.h. anströmseitig, mit einem vorderen Plattformüberhang 16 versehen. Der Plattformüberhang 16 hat einen plattenartigen Querschnitt und weist eine schaufelfußseitige Überhangfläche 18 und eine schaufelblattseitige Überhangfläche 20 auf. Im hinteren Bereich, d.h. abströmseitig, hat die Plattform 8 einen in Richtung des Schaufelblatts 6 versetzten hinteren Plattformüberhang 22 mit einem plattenartigen Querschnitt und einer schaufelfußseitigen Überhangfläche 24 und einer schaufelblattseitigen Überhangsfläche 26 auf.

Erfindungsgemäß geht die vordere schaufelfußseitige Überhangfläche 18 über einen variablen Übergangsradius Rv1 in eine vordere Schaufelfußfläche 28 über. Der Überhangsradius Rv1 verändert sich druckseitig von einem kleinen Übergangsradius r1 über einen ansteigen Übergangsradius r2 in einen großen saugseitigen Überhangsradius r3, so dass quasi ein durch variable Formlinien 30, 32 angedeuteter tulpenartiger Übergangsbereich 34 mit einer Symmetrieachse 35 entsteht. Eine ausführlichere Betrachtung des erfindungsgemäßen Übergangsradius Rv1 erfolgt in Figur 2.

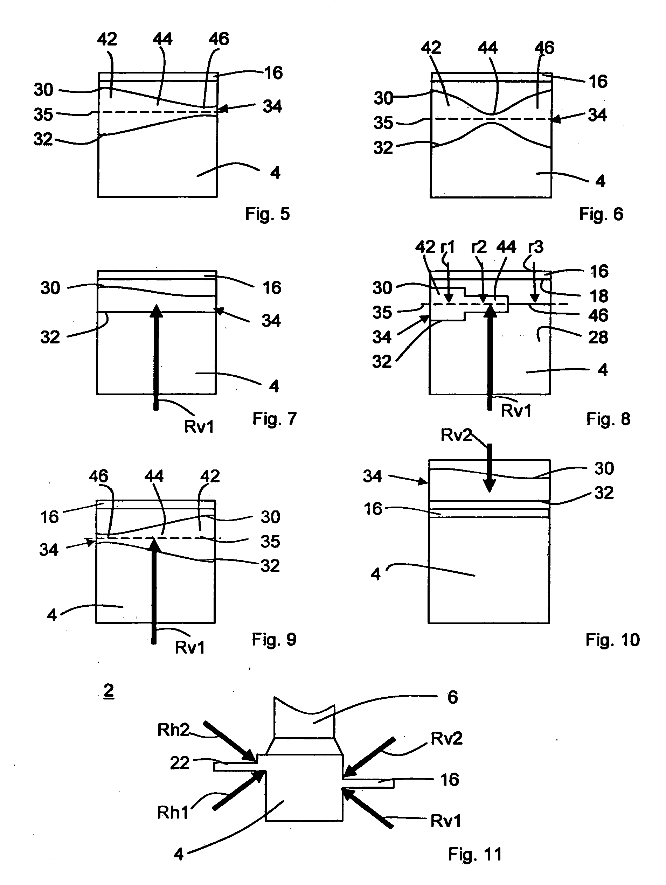

Der Übergangsradius Rv2 im Übergangsbereich der vorderen schaufelblattseitigen Überhangfläche 20 zur vorderen Plattformfläche 36 ist konstant ausgebildet. Ebenso sind die Übergangsradien Rh1, Rh2 des hinteren Plattformüberhangs 22 im Übergangsbereich von den Überhangflächen 24, 26 zur hinteren Schaufelfußfläche 38 bzw. zur hinteren Plattformfläche 40 konstant ausgebildet. Sämtliche Übergangsradien Rv1, Rv2, Rh1, Rh2 können jedoch variabel ausgebildet sein (vgl. Figuren 6 bis 11).

Gemäß der Darstellung in Figur 2 lässt sich der Übergangsbereich 34 in einen Endabschnitt 42 mit dem kleinen und konstanten Radius r1, einen Zwischenabschnitt 44 mit dem ansteigenden Radius r2 und in einen Endabschnitt 46 mit dem großen und konstanten Radius r3 unterteilen. Somit weist der Übergangsradius Rv1 zwei Endabschnitte 42, 46 mit jeweils einem konstanten Radius r1, r3 und einen Zwischenabschnitt 44 mit einem ansteigenden Radius r2 auf. In Rotationsrichtung 48 des nicht gezeigten Rotors betrachtet nimmt der Übergangsradius Rv1 somit. insgesamt zu. Beispielsweise beträgt der kleine Radius r1 nur wenige zehntel Millimeter und der große Radius r3 = 8 mm. Es sind jedoch auch noch größere Radien vorstellbar. Erfindungsgemäß bewirkt der kleine Radius r1 im Endabschnitt 42 eine Spannungsreduzierung und Schwingungsoptimierung in Bereichen mit hohen Belastungen und der große Radius r2 im Endabschnitt 46 eine Spannungsreduzierung und Schwingungsoptimierung in Bereichen mit geringen Belastungen. Somit ist gezielt an dem Endabschnitt 46 mit geringer Spannung Masse zur Reduzierung der Schwingung angeordnet und an dem Endabschnitt 42 mit hoher Spannung Masse entfernt und damit die Spannung an verschiedenen Bereichen der Laufschaufel 2 verringert bzw. optimiert eingestellt.

Der Vollständigkeit halber sei noch ein in Figur 2 sichtbares schaufelblattspitzenseitiges Deckband 50 der Laufschaufel 2 erwähnt.

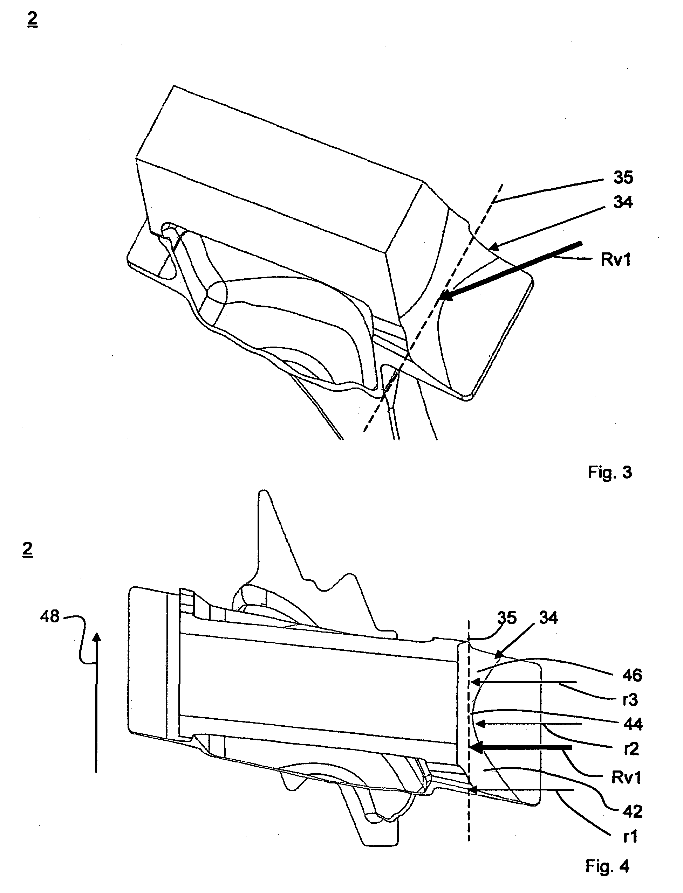

Die Figuren 3 und 4 zeigen ein zweites erfindungsgemäßes Ausführungsbeispiel einer Laufschaufel 2 mit zumindest einem variablen vorderen schaufelseitigen Übergangsradius Rv1, der einen unteren Übergangsbereich 34 mit einer Symmetrieachse 35 definiert. Im Gegensatz zum vorbeschriebenen Ausführungsbeispiel nach den Figuren 1 und 2 wird dieser Übergangsbereich 34 von zwei wannen- bzw. bogenartige Formlinien 30, 32 gebildet, die einen engen Zwischenabschnitt 44 mit einem variablen Radius r2 und zwei trichter- bzw. tulpenartige Endabschnitte 42, 46 mit ansteigenden Radien r1, r3 begrenzen, wobei die Radien r1, r2 im gleichen Maße ansteigen oder unterschiedlich ausgeführt sein können.

Die Figuren 5 und 6 zeigen stark vereinfachte Vorderansichten der Laufschaufel 2 aus den Figuren 1 und 2 bzw. 3 und 4, so dass auf wiederholende Erläuterungen verzichtete wird. Aus Gründen der Übersichtlichkeit ist in den Figuren 5 und 7 sowie in den folgenden Figuren 7 bis 10 die Laufschaufel 2 jeweils auf einen schematischen Schaufelfuß 4 und einen schematischen vorderen Plattformüberhang 16 reduziert.

Die Figuren 7, 8, 9 und 10 zeigen weitere bevorzugte Ausführungsbeispiele einer erfindungsgemäßen Laufschaufel 2. So zeigt Figur 7 einen vorderen unteren Übergangsbereich 34 mit einem variablen Übergangsradius Rv1. Der Übergangsbereich 34 ist saugseitig erweitert und im Gegensatz zu den vorbeschriebenen Ausführungsbeispielen nach den Figuren 1 bis 6 ohne eine Symmetrieachse 35 ausgebildet. Der Übergangsbereich 34 weist eine plattformüberhangseitige variable Formlinie 30 und eine konstante, parallel zum Plattformüberhang 16 verlaufende schaufelfußseitige Formlinie 32 auf.

Figur 8 zeigt einen vorderen unteren Übergangsbereich 34 mit einer Symmetrieachse 35, der von einem diskretisierten variablen Übergangsradius Rv1 gebildet ist, so dass stufenartige Formlinien 30, 32 entstehen. Der Übergangsradius Rv1 weist drei Abschnitte 42, 44, 46 mit jeweils einem konstanten Radius r1, r2, r3 auf, wobei der größte Radius r3 saugseitig und der kleinste Radius r1 druckseitig angeordnet ist. In dem gezeigten Ausführungsbeispiel beträgt der kleinste Radius r1 = 0 mm, so dass die vordere schaufelfußseitige Übergangfläche 18 druckseitig ohne bzw. nahezu ohne Übergangsradius Rv1 in die vordere Schaufelfußfläche 28 übergeht.

Figur 9 verdeutlicht anlehnend an dem in den Figuren 1, 2 und 5 beschriebenen Ausführungsbeispiel, dass es bei sämtlichen Ausführungsbeispielen ebenfalls vorstellbar ist, den Übergangsradius Rv1 saugseitig verkleinert und druckseitig vergrößert auszubilden.

Figur 10 zeigt anlehnend an dem in Figur 7 beschriebenen Ausführungsbeispiel, dass es bei sämtlichen Ausführungsbeispielen ebenfalls vorstellbar ist, einen variablen Übergangsradius Rv2 schaufelblattseitig auszubilden.

Zusammenfassend wird auf Figur 11 verwiesen, die eine stark vereinfachte Seitendarstellung einer Laufschaufel 2 mit einem Schaufelfuß 4, einem Schaufelblatt 6 und zwei Plattformüberhangen 16, 22 zeigt, in der die wesentlichen Übergangsradien Rv1, Rv2, Rh1, Rh2 eingezeichnet sind. Erfindungsgemäß können sämtliche gezeigte Übergangsradien Rv1, Rv2, Rh1, Rh2 für sich oder in Kombination variabel ausgeführt sein und sowohl saug- als auch druckseitig verkleinerte bzw. vergrößerte Radien r1, r2, r3 aufweisen.

Offenbart ist eine Schaufel 2 einer Strömungsmaschine, insbesondere eine Laufschaufel einer Gasturbine, die im Bereich zumindest eines Plattformüberhangs 16 einen variablen Übergangsradius Rv1 aufweist, sowie eine Strömungsmaschine mit zumindest einer derartigen Schaufel 2.

## Patentansprüche

1. Laufschaufel (2) für eine Strömungsmaschine mit einem Schaufelfuß (4) zur Befestigung an einem Rotor, mit einem Schaufelblatt (6), mit einer zwischen dem Schaufelfuß (4) und dem Schaufelblatt (6) angeordneten Plattform (8) und mit zumindest einem an der Plattform (8) ausgebildeten an- oder abströmseitigen Plattformüberhang (16, 22) mit einem plattenartigen Querschnitt, der eine schaufelfußseitige Überhangfläche (18, 24) und eine schaufelblattseitige Überhangfläche (20, 26) aufweist, wobei der Schaufelfuß (4) eine vordere Schaufelfußfläche (28) und eine hintere Schaufelfußfläche (38) aufweist, wobei der Plattformüberhang (16, 22) in einem Übergangsbereich (34) zur Plattform (8) zumindest einen variablen Übergangsradius (Rv1, Rv2, Rh1, Rh2) aufweist, wobei der Übergangsbereich (34) zwischen der vorderen schaufelblattseitigen Überhangfläche (20) und einer vorderen Plattformfläche (36), zwischen der hinteren schaufelblattseitigen Überhangfläche (26) und einer hinteren Plattformfläche (40), zwischen der vorderen schaufelfußseitigen Überhangfläche (18) und der vorderen Schaufelfußfläche (28) und/oder zwischen der hinteren schaufelfußseitigen Überhangfläche (24) und der hinteren Schaufelfußfläche (38) angeordnet ist, wobei der variable Übergangsradius (Rv1, Rv2, Rh1, Rh2) in Rotationsrichtung (48) betrachtet einen ersten Endabschnitt (42), einen zweiten Endabschnitt (46) und einen dazwischen angeordneten Zwischenabschnitt (44) aufweist, **dadurch gekennzeichnet, dass** der Zwischenabschnitt (44) einen Radius (r2) aufweist, der kleiner ist als ein Radius (r1) des ersten Endabschnitts (42) und/oder als ein Radius (r3) des zweiten Endabschnitts (46).

2. Laufschaufel nach Anspruch 1, wobei der Übergangsradius (Rv1) schaufelfußseitig ausgebildet ist.

3. Laufschaufel nach Anspruch 1 oder 2, wobei der Übergangsradius (Rv1) in Plattformbereichen (42) mit hohen Belastungen kleiner ist als in Plattformbereichen (46) mit geringen Belastungen.

4. Laufschaufeln nach Anspruch 3, wobei der Übergangsradius (Rv1) in Rotationsrichtung (48) des Rotors zunimmt

5. Laufschaufel nach Anspruch 3 oder 4, wobei der Übergangsradius (Rv1) in Plattformbereichen (42) mit hohen Belastungen reduziert ist.

6. Laufschaufel nach Anspruch 3,4 oder 5, wobei der Übergangsradius (Rv1) in Plattformbereichen (46) mit geringen Belastungen vergrößert ist.

7. Laufschaufel nach einem der vorhergehenden Ansprüche, wobei der Übergangsradius (Rv1) abschnittsweise konstant ist.

8. Laufschaufel nach Anspruch 7, wobei der Übergangsradius (Rv1) stufenartig ausgebildet ist.

9. Laufschaufel nach Anspruch 8, wobei ein konstanter Übergangsradius (r1, r3) endseitig ausgebildet ist.

10. Laufschaufel nach einem der vorhergehenden Ansprüche, wobei der Plattformüberbang (16, 22) schaufelblattseitig zumindest einen konstanten Übergangsradius (Rv2, Rh2) aufweist.

11. Laufschaufel nach einem der vorhergehenden Ansprüche, wobei ein weiterer Plattformüberhang (22) mit einem variablen Übergangsradius (Rh1, Rh2) vorgesehen ist.

12. Laufschaufel nach einem der Ansprüche 1 bis 10, wobei zumindest zwei weitere plattformseitige Übergangsradien (Rv2, Rh1, Rh2) variabel ausgebildet sind.

13. Laufschaufeln nach einem der Ansprüche 1 bis 10, wobei sämtliche plattformseitige Übergangsradien (Rv1, Rv2, Rh1, Rh2) variabel ausgebildet sind.

14. Laufschaufel nach einem der vorhergehenden Ansprüche, wobei der weitere Plattformüberhang (12) mit einem konstanten Übergangsradius (Rh1, Rh2) versehen ist.

15. Strömungsmaschine, insbesondere eine Gasturbine für ein Flugzeugtriebwerk, mit zumindest einer Laufschaufel (2) nach einem der vorhergehenden Ansprüche.

## Claims

1. A rotor blade (2) for a turbomachine with a blade root (4) for attachment to a rotor, with a blade leaf (6), with a platform (8) arranged between the blade root (4) and the blade leaf (6) and with at least one platform in-flow or out-flow side overhang (16, 22) formed on the platform with a plate-like cross section which has a blade root side overhang surface (18, 24) and a blade leaf side overhang surface (20, 26), wherein the blade root (4) has a front blade root surface (28) and a rear blade root surface (38), wherein the platform overhang (16, 22) has at least a variable transition radius (Rv1, Rv2, Rh1, Rh2) in a transition area (34) to the platform (8), wherein the transition area (34) is arranged between the front blade leaf side overhang surface (20) and a front platform surface (36), between the rear blade root side overhang surface (26) and a rear platform surface (40), between the front blade root side overhang surface (18) and the front blade root surface (28) and/or between the rear blade root side overhang surface (24) and the rear blade root surface (38), wherein the variable transition radius (Rv1, Rv2, Rh1, Rh2) viewed in the direction of rotation (48) has a first end section (42), a second end section (46) and an interim section (44) arranged in-between, **characterised in that** the interim section (44) has a radius (r2) which is smaller than a radius (r1) of the first end section (42) and/or than a radius (r3) of the second end section (46).

2. The rotor blade according to claim 1, wherein the transition radius (Rv1) is formed on the blade root side.

3. The rotor blade according to claim 1 or 2, wherein the transition radius (Rv1) in platform areas (42) with high loads is smaller than in platform areas (46) with low loads.

4. The rotor blade according to claim 3, wherein the transition radius (Rv1) increases in the direction of rotation (48) of the rotor.

5. The rotor blade according to claim 3 or 4, wherein the transition radius (Rv1) is reduced in platform areas (42) with high loads.

6. The rotor blade according to claim 3, 4 or 5, wherein the transition radius (Rv1) is enlarged in platform areas (46) with low loads.

7. The rotor blade according to any of the preceding claims, wherein the transition radius (Rv1) is constant section by section.

8. The rotor blade according to claim 7, wherein the transition radius (Rv1) is formed in tiers.

9. The rotor blade according to claim 8, wherein a constant transition radius (r1, r3) is formed at the ends.

10. The rotor blade according to any of the preceding claims, wherein the platform overhang (16, 22) on the blade leaf side has at least a constant transition radius (Rv2, Rh2).

11. The rotor blade according to any of the preceding claims, wherein an additional platform overhang (22) with a variable transition radius (Rh1, Rh2) is provided.

12. The rotor blade according to any of claims 1 to 10, wherein at least two additional platform side transition radii (Rv2, Rh1, Rh2) are variably formed,

13. The rotor blade according to any of claims 1 to 10, wherein all platform side transition radii (Rv1, Rv2, Rh1, Rh2) are variably formed.

14. The rotor blade according to any of the preceding claims, wherein the additional platform overhang (22) is provided with a constant transition radius (Rh1, Rh2).

15. A turbomachine, in particular a gas turbine for an aircraft engine, with at least one rotor blade (2) according to any of the preceding claims.

## Revendications

1. Aube mobile (2) pour une turbomachine comprenant un pied d'aube (4) destiné à être fixé à un rotor, une lame d'aube (6), une plateforme (8) disposée entre le pied d'aube (4) et la lame d'aube (6), et au moins une partie de plateforme faisant saillie (16, 22) formée en amont ou en aval sur la plateforme (8) avec une section transversale du genre plateau, laquelle présente une surface de saillie côté pied d'aube (18, 24) et une surface de saillie côté lame d'aube (20, 26), le pied d'aube (4) présentant une surface de pied d'aube avant (28) et une surface de pied d'aube arrière (38), la partie de plateforme faisant saillie (16, 22) présentant au moins un rayon de transition variable (Rv1, Rv2, Rh1, Rh2) dans une région de transition (34) vers la plateforme (8), la région de transition (34) étant disposée entre la surface de saillie côté lame d'aube avant (20) et une surface de plateforme avant (36), entre la surface de saillie côté lame d'aube arrière (26) et une surface de plateforme arrière (40), entre la surface de saillie côté pied d'aube avant (18) et la surface de pied d'aube avant (28) et/ou entre la surface de saillie côté pied d'aube arrière (24) et la surface de pied d'aube arrière (38), le rayon de transition variable (Rv1, Rv2, Rh1, Rh2) présentant une première section terminale (42), une deuxième section terminale (46) et une section intermédiaire (44) disposée entre celles-ci, vue dans la direction de rotation (48), **caractérisée en ce que** la section intermédiaire (44) présente un rayon (r2) inférieur à un rayon (r1 de la première section terminale (42) et/ou à un rayon (r3) de la deuxième section terminale (46),

2. Aube mobile selon la revendication 1, dans laquelle le rayon de transition (Rv1) est formé côté pied d'aube.

3. Aube mobile selon la revendication 1 ou 2, dans laquelle le rayon de transition (Rv1) est plus petit dans des régions de plateforme (42) supportant des charges élevées que dans des régions de plateforme (46) supportant des charges faibles.

4. Aube mobile selon la revendication 3, dans laquelle le rayon de transition (Rv1) augmente dans la direction de rotation (48) du rotor.

5. Aube mobile selon la revendication 3 ou 4, dans laquelle le rayon de transition (Rv1) est réduit dans des régions de platafiorme (42) supportant des charges élevées.

6. Aube mobile selon la revendication 3, 4 ou 5, dans laquelle le rayon de transition (Rv1) est augmenté dans des régions de plateforme (46) supportant des charges faibles.

7. Aube mobile selon l'une des revendications précédentes, dans laquelle le rayon de transition (Rv1) est constant par sections.

8. Aube mobile selon la revendication 7, dans laquelle le rayon de transition (Rv1) est formé de façon étagée.

9. Aube mobile selon la revendication 8, dans laquelle un rayon de transition constant (r1, r3) est formé côté extrémité.

10. Aube mobile selon l'une des revendications précédentes, dans laquelle la partie de plateforme faisant saillie (16, 22) présente au moins un rayon de transition constant (Rv1, Rv2) côté lame d'aube.

11. Aube mobile selon l'une des revendications précédentes, dans laquelle il est prévu une autre partie de plateforme faisant saillie (22) avec un rayon de transition variable (Rh1, Rh2).

12. Aube mobile selon l'une des revendications 1 à 10, dans laquelle au moins deux autres rayons de transition côté plateforme (Rv2, Rh1, Rh2) sont variables.

13. Aube mobile selon l'une des revendications 1 à 10, dans laquelle tous les rayons de transition côté plateforme (Rv1, Rv2, Rh1, Rh2) sont variables,

14. Aube mobile selon l'une des revendications précédentes, dans laquelle l'autre partie de plateforme faisant saillie (22) est dotée d'un rayon de transition constant (Rh2, Rh2).

15. Turbomachine, en particulier une turbine à gaz pour un moteur d'avion, comprenant au moins une aube mobile (2) selon l'une des revendications précédentes.
